# EUROPEAN PATENT APPLICATION

(11) **EP 4 412 328 A1**
(43) Date of publication of application: **07.08.2024**
(21) Application number: 21959450.4
(22) Date of filing: 30.09.2021
(51) Int. Cl.: H04W 64/00, H04W 72/04

(54) **TERMINAL AND BASE STATION**

(71) Applicant: NTT DOCOMO, INC., Tokyo 100-6150 (JP)
(72) Inventor: OKAMURA, Masaya, Tokyo 100-6150 (JP); OHARA, Tomoya, Tokyo 100-6150 (JP); SHIMA, Kousuke, Tokyo 100-6150 (JP); HARADA, Hiroki, Tokyo 100-6150 (JP)
(74) Representative: Hoffmann Eitle
(86) International application number: PCT/JP2021/036317
(87) International publication number: WO 2023/053416

(57) **Abstract**

A terminal includes: a transmission unit configured to transmit, to a base station, information indicating a measurement gap for positioning using a reference signal in downlink by a MAC-CE or a UCI; and a control unit configured to assume receiving of the reference signal by the measurement gap.

## Description

### Technical Field

The present invention relates to a terminal and a base station in a radio communication system.

### [Background Art]

In 3GPP (3rd Generation Partnership Project), in order to realize a further increase in system capacities, a further increase in data transmission rates, a further reduction in delays in radio sections, and the like, a radio communication scheme called 5G or NR (New Radio) (hereinafter, the radio communication scheme is referred to as "NR") is being developed. In NR, various radio technologies and network architectures have been studied in order to satisfy the requirement that the delay in a radio section be equal to or less 1 ms while realizing a throughput equal to or greater than 10 Gbps.

Further, "Positioning" for performing positioning using a reference signal or the like has been studied. As a method of Positioning, for example, there is a method in which a terminal receives downlink (DL) reference signals (DL-PRSs (Positioning reference signals)) from a plurality of base stations and performs positioning based on a time difference between reception timings or the like.

### Related Art Document

### Non-Patent Documents

Non-Patent Document 1: 3GPP TS 38.331 V16.5.0 (2021-06)

### SUMMARY OF THE INVENTION

### Problems to be Solved by the Invention

In Rel-16 NR, a terminal receives a reference signal using a measurement gap (MG) for DL positioning and performs positioning. In Rel-16 NR, it is defined that an MG request (to be more specific, LocationMeasurementInfo) is transmitted from the terminal to a base station by RRC signaling (Non-Patent Document 1).

Since the RRC signaling causes a large delay, an MG request using low-delay signaling is under study to reduce the delay.

To be more specific, "Option 1: MG request from LMF (Location Management Function) to the base station by NRPAa message" and "Option 2: MG request from the terminal to the base station by UCI or UL MAC CE" are proposed. However, the terminal operation for option 1 and option 2 is not clear. Therefore, the terminal may not be able to properly receive the reference signal for positioning.

The present invention has been made in view of the above, and an object of the present invention is to provide a technique that enables a terminal to properly receive a reference signal for positioning.

### Means for Solving the Problems

According to the disclosed technique, there is provided a terminal including:
a transmission unit configured to transmit, to a base station, information indicating a measurement gap for positioning using a reference signal in downlink by a MAC-CE or a UCI; and
a control unit configured to assume receiving of the reference signal by the measurement gap.

### Effects of the Invention

According to the disclosed technique, a terminal can properly receive a reference signal for positioning.

### Brief Description of the Drawings

[Fig. 1] FIG. 1 is a diagram for explaining a radio communication system according to an embodiment of the present invention;
[Fig. 2] FIG. 2 is a diagram for explaining a radio communication system according to an embodiment of the present invention;
[Fig. 3] FIG. 3 is a diagram for explaining a basic operation of the radio communication system according to an embodiment of the present invention;
[Fig. 4] FIG. 4 is a diagram for explaining an operation example in Example 0;
[Fig. 5] FIG. 5 is a diagram for explaining an operation example in Example 0;
[Fig. 6] FIG. 6 is a diagram for explaining an operation example in Example 1;
[Fig. 7] FIG. 7 is a diagram for explaining an operation example in Example 1;
[Fig. 8] FIG. 8 is a diagram for explaining an operation example in Example 2;
[Fig. 9] FIG. 9 is a diagram for explaining an operation example in Example 2;
[Fig. 10] FIG. 10 is a diagram for explaining an operation example in Example 3;
[Fig. 11] FIG. 11 is a diagram showing an example of a functional configuration of a base station 10 according to an embodiment of the present invention;
[Fig. 12] FIG. 12 is a diagram showing an example of a functional configuration of a terminal 20 according to an embodiment of the present invention;
[Fig. 13] FIG. 13 is a diagram showing an example of a functional configuration of an LMF 30 according to an embodiment of the present invention;
[Fig. 14] FIG. 14 is a diagram showing an example of a hardware configuration of the base station 10, the terminal 20, or the LMF 30 according to an embodiment of the present invention; and
[Fig. 15] FIG. 15 is a diagram showing an example of a vehicle.

### Detailed Description of the Invention

Hereinafter, embodiments of the present invention will be described with reference to the drawings. The embodiment described below is an example, and the embodiment to which the present invention is applied is not limited to the following embodiment.

### (System Configuration)

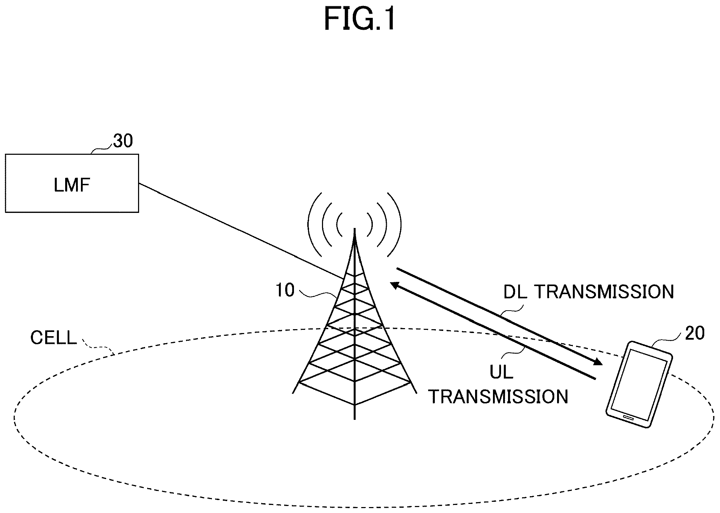

FIG. 1 is a diagram for explaining a radio communication system according to an embodiment of the present invention. As shown in FIG. 1, the radio communication system according to the embodiment of the present invention includes a base station 10 and a terminal 20. The core network is provided with an LMF 30 that can communicate with the base station 10. The LMF 30 may communicate with the base station 10 via an AMF.

Although one base station 10 and one terminal 20 are illustrated in FIG. 1, this is merely an example, and a plurality of base stations 10 and a plurality of terminals 20 may be provided. For example, a plurality of base stations 10 serving as transmission sources of DL-PRS received by the terminal 20 may be provided.

The base station 10 is a communication device that provides one or more cells and performs radio communication with the terminal 20. A physical resource of a radio signal is defined in a time domain and a frequency domain, and the time domain may be defined by the number of OFDM symbols, and the frequency domain may be defined by the number of subcarriers or the number of resource blocks. In addition, a transmission time interval (TTI) in the time domain may be a slot, or a TTI may be a subframe.

The base station 10 can perform carrier aggregation in which a plurality of cells (a plurality of component carriers (CCs)) are aggregated to communicate with the terminal 20. In carrier aggregation, one PCell (primary cell) and one or more SCells (secondary cells) are used.

The base station 10 transmits a synchronization signal, system information, and the like to the terminal 20. The synchronization signal is, for example, an NR-PSS and an NR-SSS. The system information is transmitted by, for example, an NR-PBCH or a PDSCH, and is also referred to as broadcast information. As illustrated in FIG. 1, the base station 10 transmits a control signal or data to the terminal 20 in downlink (DL), and receives a control signal or data from the terminal 20 in uplink (UL). Note that, although what is transmitted in a control channel such as a PUCCH and a PDCCH is referred to as a control signal and what is transmitted in a shared channel such as a PUSCH and a PDSCH is referred to as data here, such a way of referring to is merely an example. Also, UCI (Uplink Control Information) is transmitted on the PUCCH or the PUSCH.

The terminal 20 is a communication apparatus having a radio communication function, such as a smartphone, a mobile phone, a tablet, a wearable terminal, and a machine-to-machine (M2M) communication module. As illustrated in FIG. 1, the terminal 20 receives a control signal or data from the base station 10 in DL and transmits a control signal or data to the base station 10 in UL, thereby using various communication services provided by the radio communication system. The terminal 20 may be referred to as a UE, and the base station 10 may be referred to as a gNB.

The terminal 20 can perform carrier aggregation in which a plurality of cells (a plurality of component carriers (CCs)) are aggregated to communicate with the base station 10. In carrier aggregation, one PCell (primary cell) and one or more SCells (secondary cells) are used. Also, a PUCCH-SCell with a PUCCH may be used.

The LMF 30 is a function that performs communication control related to a location information service defined in 5GC. The LMF 30 may be referred to as a location management server or a location management apparatus. As will be described later, the LMF 30 transmits an MG request to the base station 10. However, the apparatus that transmits an MG request to the base station 10 on the network side is not limited to the LMF. An apparatus other than the LMF may transmit the MG request to the base station 10.

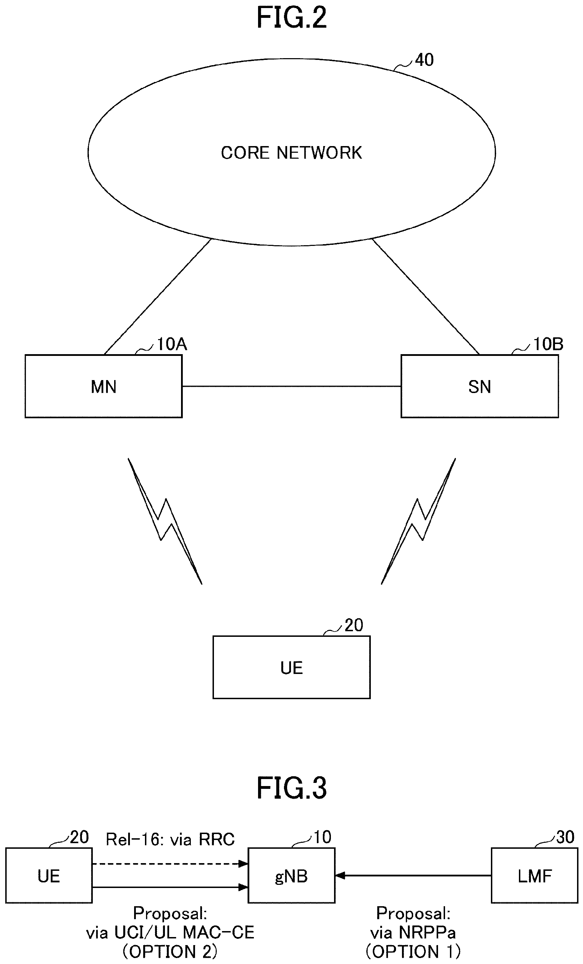

FIG. 2 illustrates a configuration example of a radio communication system in a case where dual connectivity (DC) is executed. As shown in FIG. 2, a base stations 10A as a master node (MN) and a base station 10B as a secondary node (SN) are provided. The base stations 10A and 10B are connected to a core network 40. The terminal 20 can communicate with both the base stations 10A and 10B.

A cell group provided by the base station 10A serving as the MN is referred to as a master cell group (MCG), and a cell group provided by the base station 10B serving as the SN is referred to as a secondary cell group (SCG). In DC, the MCG is formed with one PCell and one or more SCells, and the SCG is formed with one PSCell (Primary SCell) and one or more SCells.

The processing operation in the present embodiment may be executed by the system configuration shown in FIG. 1, the system configuration shown in FIG. 2, or other system configurations.

### (Basic Operation Example)

In the present embodiment, the terminal 20 receives a DL-PRS using a measurement gap (MG) for DL positioning.

The terminal 20 can perform operations described in each Example described later, and can also perform operations defined in Rel-16 NR (Non-Patent Document 1 and the like).

As an operation defined in Rel-16 NR, the terminal 20 transmits MG requests (to be more specific, LocationMeasurementInfo) to the base station 10 by an RRC signaling. The MG request (LocationMeasurementInfo) includes a carrier (ARFCN and the like) used for measurement of a DL-PRS, a periodicity of the MG, a time offset of the MG, a duration of the MG and the like.

For example, the base station 10 that has received an MG request transmits a DL-PRS in an MG designated by the MG request, and the terminal 20 receives the DL-PRS in the MG designated by the MG request.

In the present embodiment, as described above, the following option 1 or option 2, or both option 1 and option 2 can be executed.

Option 1: The LMF 30 sends an MG request to the base station 10, for example, by an NRPAa message.

Option 2: The terminal 20 transmits an MG request to the base station 10 by a UCI or an UL MAC CE.

FIG. 3 is a diagram collectively showing the above operations. The MG request in option 1 (LMF -> gNB) includes, for example, one or more of pieces of information of a periodicity of the MG, a duration of the MG, an offset of the MG, and a carrier of a DL-PRS measured by the terminal 20 (UE) using the MG. The MG request may further include more detailed configuration information of the DL-PRS.

In option 1, the base station 10 (gNB) may transmit information included in the MG request received from the LMF 30 to the terminal 20. The information transmitted from the base station 10 to the terminal 20 at this time may be an instruction to "perform DL-PRS measurement using the information" or configuration information for performing DL-PRS measurement. When the information is the configuration information for performing DL-PRS measurement, the terminal 20 may transmit an MG request for requesting an MG in the configuration information to the base station 10.

Also, the MG request in option 1 (LMF -> gNB) may include a plurality of pieces of configuration information. For example, two pieces of configuration information 1 and 2 may be included in the MG request, and the two pieces of configuration information 1 and 2 may be configuration information 1={MG period 1, MG length 1, MG offset 1, carrier 1} and configuration information 2={MG period 2, MG length 2, MG offset 2, carrier 2}. In this case, the base stations 10 (gNB) may transmit all or a part of the plurality of pieces of configuration information included in the MG request received from the LMF 30 to the terminal 20. The information transmitted from the base station 10 to the terminal 20 at this time may be an instruction to "perform DL-PRS measurement using the configuration information" or may be configuration information for performing DL-PRS measurement. In a case where the information is the configuration information for performing DL-PRS measurement, the terminal 20 may transmit an MG request for requesting an MG in the configuration information to the base station 10.

The MG request in option 2 (UE -> gNB) includes, for example, one or more pieces of information among an MG period, an MG length, an MG offset, and a carrier of DL-PRS measured by the terminal 20 (UE) using the MG. The MG request may further include more detailed configuration information of the DL-PRS.

In addition, in a step before the MG request in option 2 (UE -> gNB), one or a plurality of pieces of configuration information may be transmitted from the base station 10 to the terminal 20. Each piece of configuration information includes, for example, one or more pieces of information among {MG period, MG length, MG offset, carrier of DL-PRS measured by the terminal 20 (UE) using the MG}.

In option 1 and option 2, in a case where configuration information of an MG is transmitted from the base station 10 to the terminal 20, a number (index) may be assigned to each of one or a plurality of pieces of configuration information to be transmitted. The terminal 20 that has received the plurality of pieces of configuration information can transmit, to the base station 10, an MG request indicating which configuration information of the plurality of pieces of configuration information to use for performing DL-PRS measurement by using the index.

### (Outline of Examples)

Hereinafter, examples of operation of the terminal 20 related to option 1 and option 2 will be described as Example 0 to Example 3. The outline of the operation of Examples 0 to 3 is as follows. Hereinafter, option 1 is referred to as "LMF-initiated MG request", and option 2 is referred to as "UE-initiated MG request". In addition, "A/B" means "A or B, or A and B". In the following description, for convenience of description, the terminal 20 communicates with one base station 10 in the communication between the terminal 20 and the base station 10. However, the terminal 20 may perform operation described below with each of a plurality of base stations serving as transmission sources of DL-PRS.

Example 0: (High level proposal): The terminal 20 requests the base station 10 to transmit an MG by RRC/MAC-CE/UCI, and assumes performing positioning.

Example 1: In a case where a plurality of pieces of configuration information (MG configurations) of the MG are configured in the terminal 20, the terminal 20 requests, for example, one or a plurality of MG configurations from the base station 10 using RRC/MAC-CE/UCI.

Example 2: In a case where the terminal 20 supports both the LMF-initiated MG request and the UE-initiated MG request, for example, the terminal 20 assumes both of these MG requests at the same time.

Example 3: In a case where both the LMF-initiated MG request and the UE-initiated MG request are configured for the terminal 20, the priority of the MG request (MG configuration information) applied by the terminal 20 is defined in the technical specification, or the priority is configured for the terminal 20 from the base station 10 (network). The priorities may be notified from the LMF 30 to the terminal 20. Hereinafter, each Example will be described in detail.

### (Example 0)

In Example 0, the terminal 20 requests the base station 10 to transmit an MG by RRC/MAC-CE/UCI, and assumes performing positioning. Specifically, for example, when the terminal 20 transmits an MG request for a certain MG to the base station 10 through MAC-CE UCI, the terminal 20 performs an operation of the following option 1 or option 2.

### Option 1:

The terminal 20 assumes only reception of a DL-PRS in the requested MG. That is, the base station 10 transmits the DL-PRS in the MG, and the terminal 20 receives the DL-PRS in the MG.

### Option 2:

The terminal 20 assumes reception of a DL-PRS and reception of another DL signal (example: an SSB) in the requested MG. That is, the terminal 20 receives the DL-PRS and the other DL signal in the MG.

Whether the terminal 20 carries out the option 1 or the option 2 is specified in the technical specification, and the terminal 20 may carry out either the option 1 or the option 2 according to the technical specification.

Information for designating whether the terminal 20 performs the option 1 or the option 2 may be configured/updated/designated from the base station 10 to the terminal 20 by RRC/MAC-CE/DCI. The terminal 20 executes either the option 1 or the option 2 according to the information.

The terminal 20 may transmit capability information (UE capability) indicating which of the option 1 and the option 2 is supported or both the option 1 and the option 2 are supported to the base station 10.

In addition, the terminal 20 may assume that an MG (example: MG dedicated to positioning) assuming the option 1/option 2 is configured from the NW (the base station 10) separately from the MG used for a purpose other than positioning.

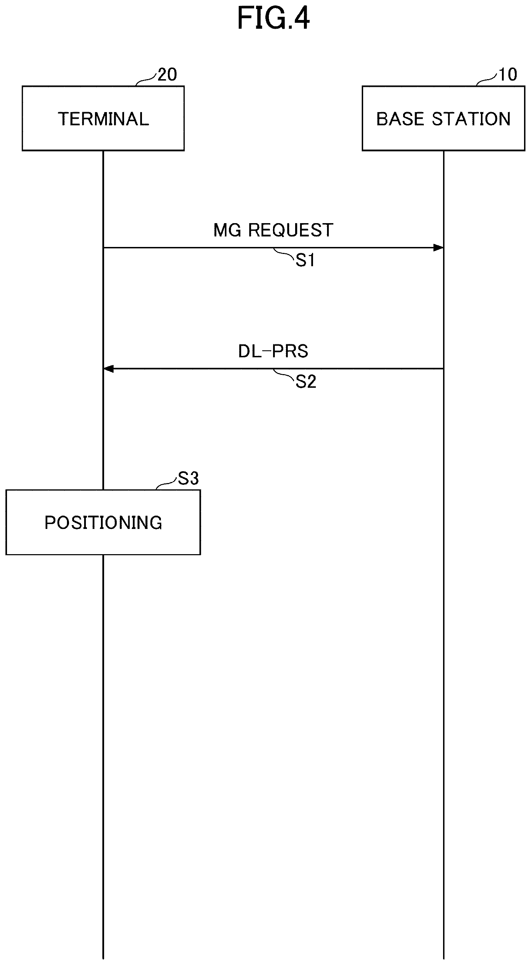

FIG. 4 shows an example of an operation sequence in Example 0. FIG. 4 shows the case of option 1. In S1, the terminal 20 transmits an MG request to the base station 10. Accordingly, the terminal 20 assumes reception of only a DL-PRS in the requested MG. In S2, the terminal 20 receives the DL-PRS transmitted from the base station 10 and performs positioning in S3.

Further, for example, the terminal 20 may transmit capability information indicating that the terminal can transmit an MG request to the network by any one or more of RRC, MAC-CE, and UCI.

Further, for example, the terminal 20 may transmit, to the base station 10, capability information indicating that the terminal 20 can be configured with a maximum of N_MG pieces of configuration information of MG from the base station 10.

As the N_MG that the terminal 20 assumes, there are the following options 1 to 4, for example. The terminal 20 assumes any of options 1 to 4.

Option 1: The number of existing MGs (MGs requested only in RRC) + the number of MGs requested by MAC-CE/UCI.
Option 2: The number of MGs requested by MAC-CE/UCI.
Option 3: The number of existing MGs (MGs requested only by RRC) + the number of positioning-dedicated MGs configured from the NW.
Option 4: The number of positioning-dedicated MGs configured by the NW.

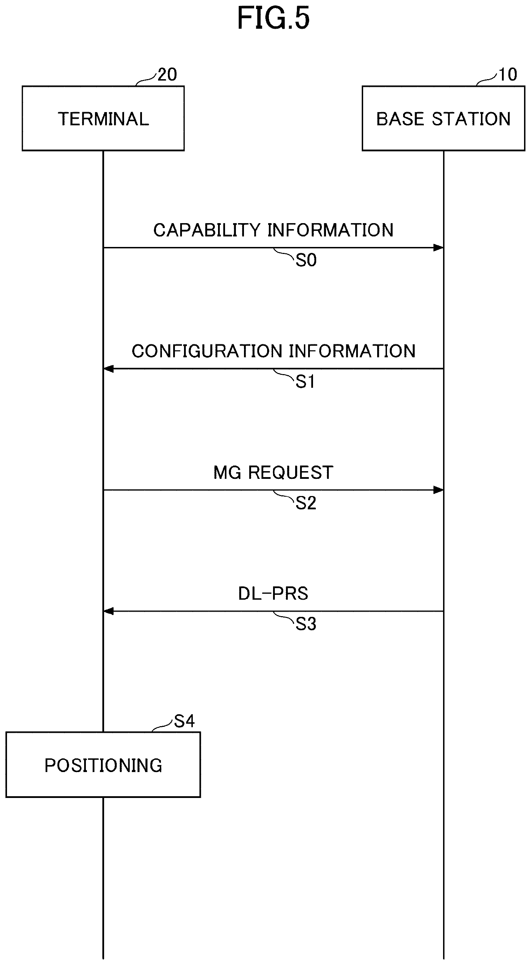

An operation example in the case of transmitting capability information for notifying of the N_MG from the terminal 20 to the base station 10 is shown in FIG. 5.

In S0, the terminal 20 transmits capability information including N_MG to the base station 10. In S1, the base station 10 transmits configuration information of one or more MGs to the terminal 20. The number of MGs is equal to or less than N MG. In S2, the terminal 20 transmits an MG request to the base station 10. The MG request includes information for designating a certain MG in the configuration information of a plurality of MGs received in S1.

In the case of option 1, in S2, the terminal 20 may request an MG from the base station 10 by the RRC and may also request an MG by the MAC-CE/UCI. The terminal 20 receives a DL-PRS in S3 and perform positioning in S4.

According to Example 0, the terminal 20 can make a positioning request with a lower delay than that in an MG request only using RRC.

### (Example 1)

Next, Example 1 will be described. In Example 1, when a plurality of pieces of configuration information of MGs (MG configurations) are configured in the terminal 20, the terminal 20 requests the base station 10 to configure one or a plurality of MGs by using RRC/MAC-CE/UCI.

For example, the terminal 20 may select one of the plurality of MGs configured by the base station 10, and may transmit configuration information of the selected MG to the base station 10 as an MG request by RRC/MAC-CE/UCI. The configuration information may be an index indicating the configuration information of the designated MG.

The terminal 20 may select X MGw from among a plurality of MGw (MG config.) configured from the base station 10, transmit information indicating the X MGs to the base station 10 as an MG request, and then transmit an MG request designating Y MGs among the X MGs to the base station 10 by MAC-CE(or UCI).

Y is an integer satisfying 1<Y<X. Y may be 1. In this example, for example, the MG request by RRC may mean that configurations of the X MGs are notified to the base station 10, and the MG request by MAC-CE (UCI) may activate, update, or designate the Y MGs among the X MGs.

Further, the terminal 20 may transmit the configuration information of the X MGs to the base station 10 as an MG request, and then transmit an MG request designating one MG among the X MGs to the base station 10 by UCI.

The terminal 20 may select X MGs from among a plurality of MGs configured by the base station 10, transmit configuration information of the X MGs to the base station 10 as an MG request, transmit an MG request designating Y MGs among the X MGs to the base station 10 by MAC-CE, and then transmit an MG request designating one MG among the Y MGs to the base station 10 by UCI.

The MG request by the UCI may activate, update, or indicate a configuration of one MG.

The terminal 20 may notify the base station 10 of values (or a range of values) of X and Y supported by the terminal 20 as capability information.

The terminal 20 may assume an operation of the following option 1 or option 2 after transmitting an MG request to the base station 10.

Option 1: The terminal 20 performs measurement corresponding to the MG configuration designated by the MG request to the base station 10. For example, the terminal 20 performs measurement of a DL-PRS in a carrier designated by the MG configuration in the MG according to the MG configuration.

Option 2: The terminal 20 performs measurement based on configuration/instruction received from the base station 10 after transmitting an MG request to the base station 10.

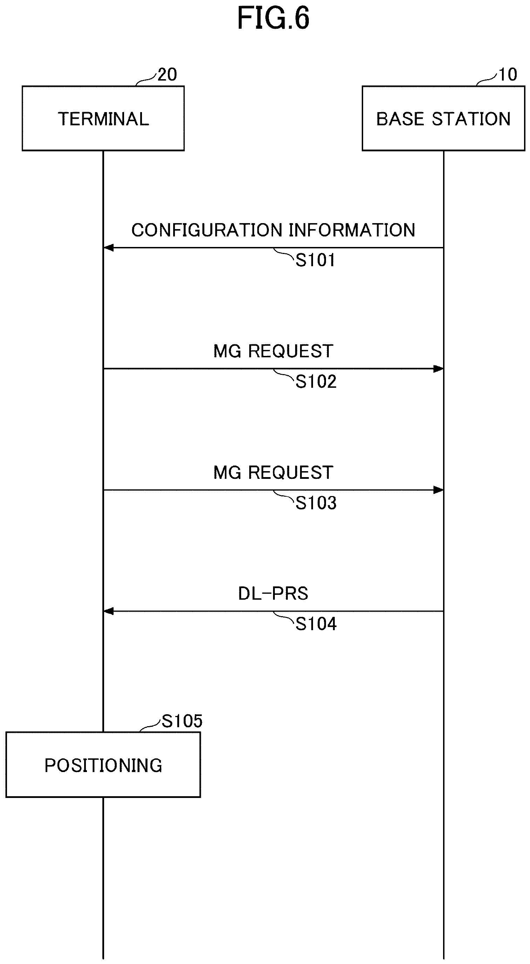

An example of an operation in the option 1 is shown in FIG. 6. Here, an example is shown in which an MG request is transmitted by RRC and MAC-CE. In S101, configuration information of a plurality of MGs is transmitted from the base station 10 to the terminal 20. In S102, the terminal 20 transmits an MG request including configuration information of X MGs to the base station 10 by RRC.

In S103, the terminal 20 transmits an MG request including configuration information of Y MGs among X MGs to the base station 10 by MAC-CE. Y MGs are activated by S103. In S104, the terminal 20 receives a DL-PRS using the activated Y MGs and performs positioning in S105.

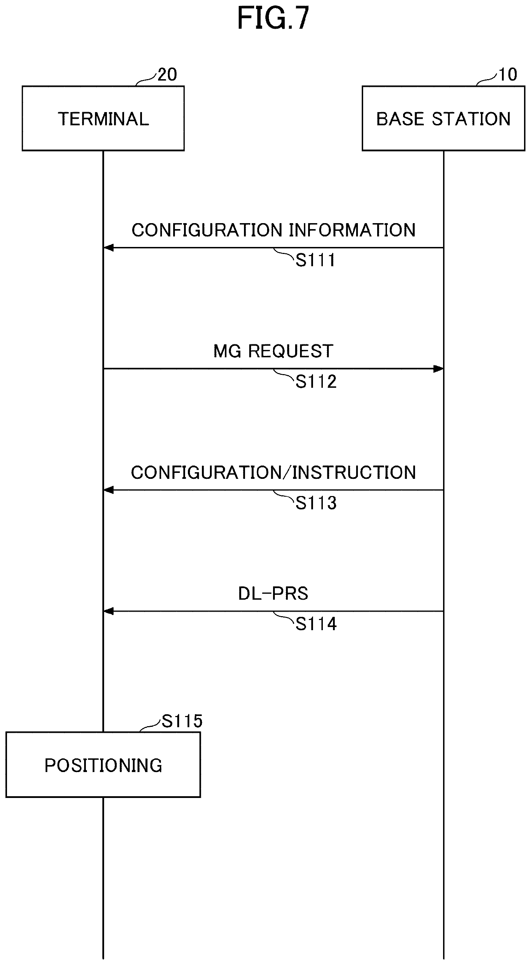

An example of an operation in the option 2 is shown in FIG. 7. In S111, configuration information of a plurality of MGs is transmitted from the base station 10 to the terminal 20. In S112, the terminal 20 transmits an MG request including configuration information of one or more MGs to the base station 10 by RRC/MAC-CE/UCI. Accordingly, the base station 10 can know a candidate of an MG configuration that the terminal 20 desires to apply.

In S113, the base station 10 transmits, to the terminal, information of one or more MGs to be applied. This information is transmitted by RRC/MAC-CE/DCI.

In S114, the terminal 20 receives a DL-PRS using an MG configured/designated in S113 and performs positioning in S115.

According to Example 1, the terminal 20 can select (or determine) a desired MG configuration and notify the base station 10 of the MG configuration by MAC-CE/UCI.

### (Example 2)

Next, Example 2 will be described. In Example 2, when the terminal 20 supports both the LMF-initiated MG request and the UE-initiated MG request, for example, the terminal 20 assumes both of these MG requests at the same time. In Example 2, Examples 2-1, 2-2, and 2-3 will be described.

### <Example 2-1: A case in which UE-initiated MG request=enable/disable is configured>

For example, when the terminal 20 is configured with the UE-initiated MG request=enable (applying UE-initiated MG request) from the base station 10, the terminal 20 performs any of the following options 1 to 3. Note that, when the terminal 20 is configured with the UE-initiated MG request=disable (not applying UE-initiated MG request) from the base station 10, the terminal 20 may perform any of the following options 1 to 3.

### Option 1:

The terminal 20 assumes that the LMF-initiated MG request is not performed. That is, the terminal assumes LMF-initiated MG request=disable. Specifically, the terminal 20 may assume that configuration information of an MG related to the LMF-initiated MG request is not configured/indicated to the terminal 20 from the base station 10.

In this case, for example, no LMF-initiated MG request is transmitted from the LMF 30 to the base station 10. Alternatively, the LMF-initiated MG request may be transmitted from the LMF 30 to the base station 10, and the base station 10 does not transmit the configuration information of an MG instructed by the LMF-initiated MG request to the terminal 20.

### Option 2:

The terminal 20 assumes that the LMF-initiated MG request is performed. That is, the terminal 20 assumes LMF-initiated MG request=enable. Specifically, the terminal 20 may assume that configuration information of an MG related to the LMF-initiated MG request is configured/designated in the terminal 20 by the base station 10.

In this case, for example, an LMF-initiated MG request is transmitted from the LMF 30 to the base station 10, and the base station 10 transmits configuration information of an MG instructed by the LMF-initiated MG request to the terminal 20.

### Option 3:

The terminal 20 assumes that enable/disable of the LMF-initiated MG request is configured by the base station 10. For example, the terminal 20 receives configuration information indicating enable or disable of the LMF-initiated MG request from the base station 10.

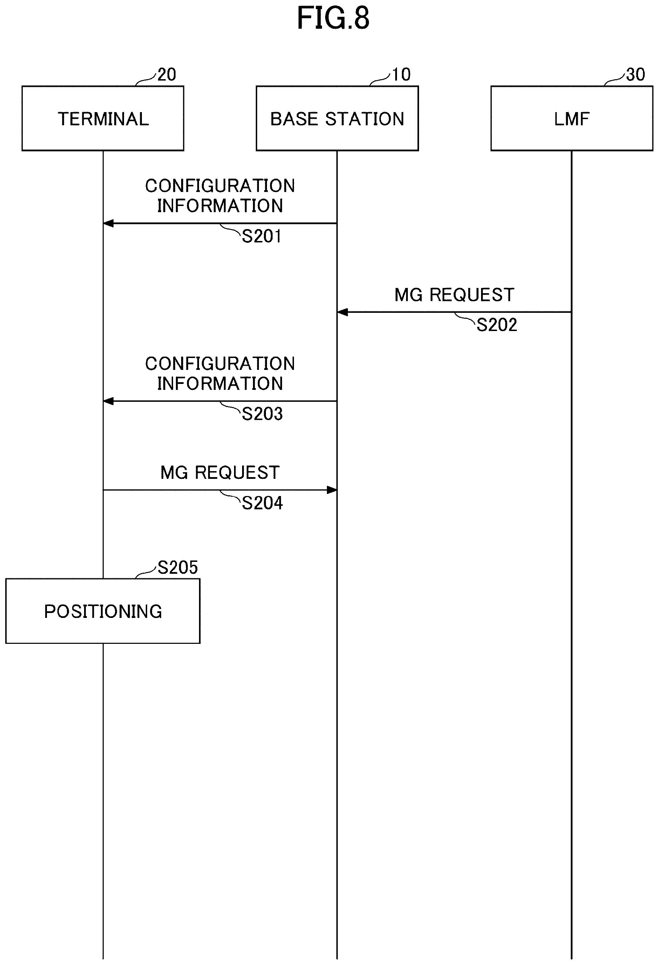

FIG. 8 shows an operation example in Example 2-1. Here, it is assumed that an operation of option 2 is performed. In S201, for example, UE-initiated MG request=enable is configured from the base station 10 to terminal 20. In S202, an MG request (LMF-initiated MG request) is transmitted from the LMF 30 to the base station 10. The MG request includes configuration information of an MG requested/ recommended/proposed by the LMF 30.

In S203, the base station 10 transmits, to the terminal 20, configuration information of one or more MGs. The configuration information of the one or more Mgs includes, for example, configuration information of an MG related to the LMF-initiated MG request.

In S204, the terminal 20 selects, for example, configuration information of one MG among one or more MGs configured by the base station 10, and notifies the base station 10 of the selected configuration information as an MG request. In S205, the terminal 20 assumes that there is a DL-PRS in the MG requested in S204, and measures the DL-PRS in S205.

### <Example 2-2: A case in which LMF-initiated MG request= enable/disable is configured>

For example, when LMF-initiated MG request=enable (applying the LMF-initiated MG request) is configured from the base station 10 to the terminal 20, the terminal 20 performs any one of the following options 1 to 3. Note that, when LMF-initiated MG request=disable (not applying the LMF-initiated MG request) is configured from the base station 10 to the terminal 20, the terminal 20 may perform any one of the following options 1 to 3.

### Option 1:

The terminal 20 does not assume performing UE-initiated MG request. That is, the terminal 20 assumes UE-initiated MG request=disable.

### Option 2:

The terminal 20 assumes performing UE-initiated MG request. That is, the terminal 20 assumes UE-initiated MG request=enable.

### Option 3:

The terminal 20 assumes that enable/disable of the UE-initiated MG request is configured by the base station 10. For example, the terminal 20 receives configuration information indicating enable or disable of the UE-initiated MG request from the base station 10.

### <Example 2-3>

In Example 2-3, the terminal 20 determines an operation after the UE-initiated MG request depending on whether the LMF-initiated MG request is enabled or disabled. The terminal 20 may determine whether the LMF-initiated MG request is enabled or disabled based on enable/disable of the UE-initiated MG request as in Example 2-1 or may determine whether the LMF-initiated MG request is enabled or disabled based on the configuration of enable/disable of the LMF-initiated MG request as in the Example 2-2.

For example, if LMF-initiated MG request=disable, the terminal 20 determines to perform the operation of option 1 in Example 1, and, if LMF-initiated MG request=enable, the terminal 20 determines to perform the operation of option 2 in Example 1.

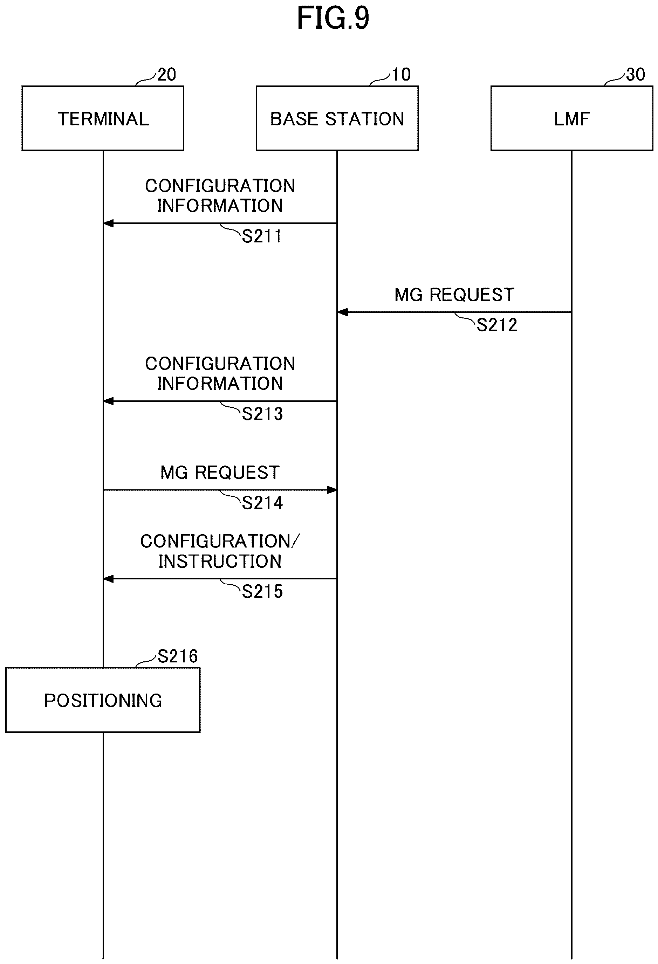

FIG. 9 shows an operation example in the case of LMF-initiated MG request=enable. In S211, for example, UE-initiated MG request=enable is configured from the base station 10 to the terminal 20. In S212, an MG request (LMF-initiated MG request) is transmitted from the LMF 30 to the base station 10. The MG request includes configuration information of an MG requested/recommended/proposed by the LMF 30.

In S213, one or more pieces of MG configuration information is (are) transmitted from the base station 10 to the terminal 20. The configuration information of the one or more MGs includes, for example, configuration information of an MG related to the LMF-initiated MG request.

In S214, the terminal 20 notifies the base station 10 of an MG request. The MG request includes, for example, configuration information of an MG proposed by the terminal 20. In S215, for example, the base station 10 transmits, to the terminal 20, an instruction to use the MG proposed by the terminal 20. In S215, the base station 10 may transmit to the terminal 20 MG configuration different from the MG proposed by the terminal 20.

In S216, the terminal 20 assumes that there is a DL-PRS in the MG configured/instructed by the base station 10, and measures the DL-PRS.

According to the Example 2, the operation of the terminal 20 that supports both the LMF-initiated MG request and the UE-initiated MG request is clarified.

### (Example 3)

In any case of Examples 2-1 and 2-2, in option 2 and option 3, both of an MG related to the UE-initiated MG request and an MG related to the LMF-initiated MG request may be configured in the terminal 20. An example of the processing operation in such a case will be described. Hereinafter, Example 3-1 and Example 3-2 will be described.

### <Example 3-1>

In a case where both of an MG related to the UE-initiated MG request and an MG related to the LMF-initiated MG request are configured in the terminal 20, for example, priorities of MG requests (configurations of MGs) applied by the terminal 20 are defined in the technical specification, and the terminal 20 operates according to the definition.

For example, in a case where MG1 and MG2 are configured to the terminal 20 as candidate configuration information of MGs for the UE-initiated MG request, and MG3 is configured as configuration information of MGs by the LMF-initiated MG request, if it is defined in the technical specifications that the "UE-initiated MG request" is applied with the highest priority, the terminal 20 applies MG1 or MG2. That is, for example, the terminal transmits an MG request designating MG1 or MG2 to the base station 10.

In addition, in a case where both an MG related to the UE-initiated MG request and an MG related to the LMF-initiated MG request are configured in the terminal 20, for example, the priority of the MG request (configuration of the MG) applied to the terminal 20 may be configured (or updated or indicated) in the terminal 20 from the base station 10 (network). The configuration/update/indication is performed by, for example, RRC/MAC-CE/DCI. Alternatively, the priority may be notified from the LMF 30 to the terminal 20. The notification is performed by, for example, LPP.

For example, in a case where MG1 and MG2 are configured as candidate configuration information of MGs for the UE-initiated MG request and MG3 is configured as configuration information of MGs by the LMF-initiated MG request, if configuration that "LMF-initiated MG request" is applied with the highest priority is made from the base station 10 to the terminal 20, the terminal 20 applies MG3.

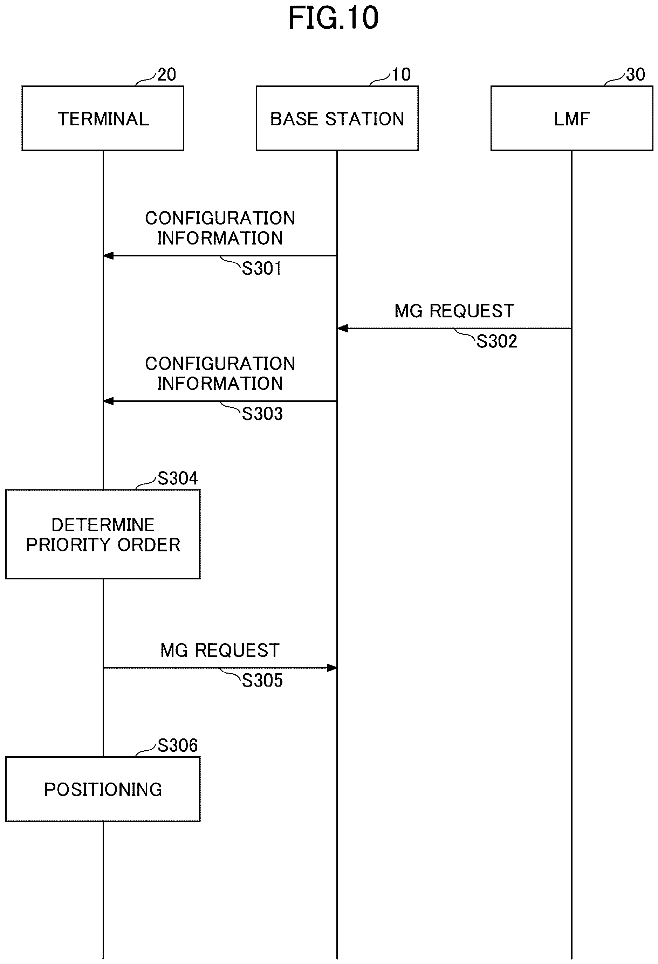

An operation example of Example 3-1 will be described with reference to FIG. 10.

In S301, a plurality of pieces of MG configuration information that are candidates for the UE-initiated MG request are configured from the base station 10 to the terminal 20. In S302, an MG request (LMF-initiated MG request) is transmitted from the LMF 30 to the base station 10. The MG request includes configuration information of an MG requested/recommended/proposed by the LMF 30.

In S303, the base station 10 transmits, to the terminal 20, configuration information of MGs related to the LMF-initiated MG request.

Here, it is assumed that the technical specification defines that the UE-initiated MG request is prioritized over the LMF-initiated MG request. In S304, the terminal 20 determines that the UE-initiated MG request is prioritized. In S305, the terminal 20 selects an MG desired to be applied from among the plurality of MGs configured in S301, and transmits an MG request designating the MG to the base stations 10. The terminal 20 assumes performing DL-PRS reception in the MG requested in S305. In S306, the terminal 20 performs DL-PRS reception in the MG requested in S305.

### <Example 3-2>

The terminal 20 may determine the priority according to configuration content (example: PRS type/PRS symbol length/PRS repetition length/priority indicator/config.ID, etc.) of MG.

For example, the terminal 20 determines that the priority of an MG in which only DL-PRS Rx is configured is higher (or lower) than that of the other MGs. In this case, when the terminal 20 performs an MG request with a high priority, the terminal 20 transmits an MG request designating the MG in which only the DL-PRS Rx is configured.

For example, the terminal 20 may determine that an MG configuration having the largest (or the smallest) PRS symbol length among the plurality of MG configurations has a higher priority than that of the other MG configurations. Note that the use of the PRS symbol length as a parameter used for priority determination is merely an example. Other parameters may be used for priority determination. The other parameter may be an MG period, an MG length, or the like.

According to Example 3, the operation of the terminal 20 that supports both the LMF-initiated MG request and the UE-initiated MG request is clarified.

### (Other examples and variations)

Hereinafter, examples (variations) applicable to any of Examples 0 to 3 will be described.

Although the DL-PRS is used as a DL reference signal used for positioning in the present embodiment, this is merely an example, and a DL reference signal different from the DL-PRS may be used instead of the DL-PRS.

Further, the MG request in the present embodiment is not limited to a signal/message having a function of requesting the base station 10 to apply a certain MG. The MG request may be a signal/message having a function of proposing, recommending, or instructing the base station 10 to apply a certain MG.

Although the radio communication system of the present embodiment is assumed to be an NR system, the technology according to the present invention is not limited to NR and can be applied to other systems. Further, a plurality of systems may be mixed. For example, the technology according to the present invention can be applied to a system in which LTE and NR coexist.

Further, the "configuration information" used in the present embodiment may be a number (index) for designating specific information (example: a set of MG cycle, MG length, offset, carrier and the like).

In addition, "request" appearing in the present specification may be replaced with "trigger", "activate", "update", "indicate", and the like. Further, "gNB" (base station) may be replaced with "TRP", "RP (Reception Point)", or the like. Further, the "UE-initiated MG" may be replaced with "UE based MG", "UE triggering MG", "UE requesting MG", or the like. Further, the "LMF-initiated MG" may be replaced with "LMF based MG", LMF triggering MG", "LMF requesting MG", or the like. In addition, "assumption" in the present specification may be replaced with "determination".

### (Apparatus Configuration)

Next, functional configuration examples of the base station 10, the terminal 20, and the LMF 30 (location management apparatus) that execute the processes and operations described above will be described. The base station 10, the terminal 20, and the LMF 30 include functions for carrying out all the above-described Examples. However, each of the base station 10, the terminal 20, and the LMF 30 may instead have only the function of a single Example among the Examples.

### <Base station 10>

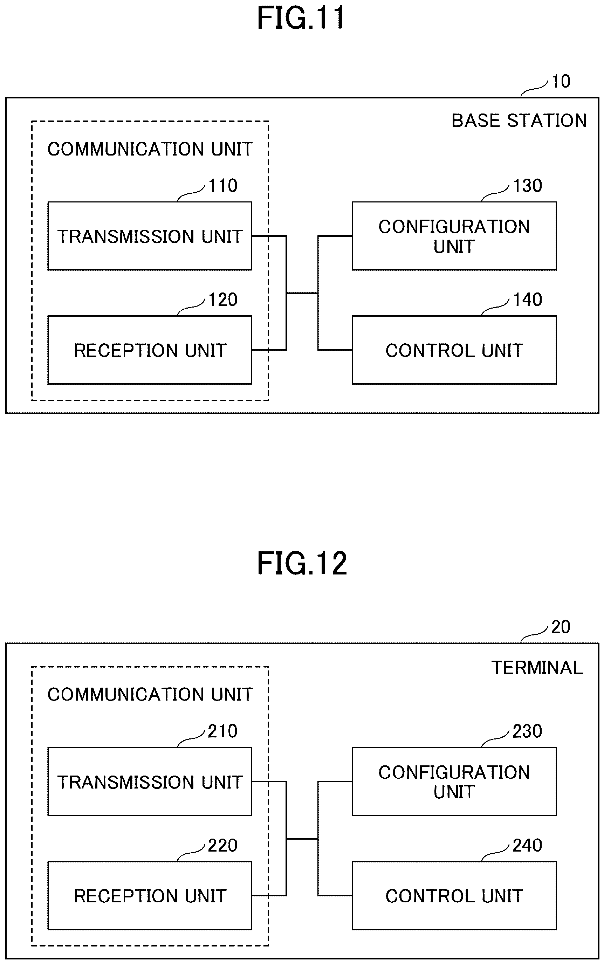

FIG. 11 is a diagram illustrating an example of a functional configuration of the base station 10. As illustrated in FIG. 11, the base station 10 includes a transmission unit 110, a reception unit 120, a configuration unit 130, and a control unit 140. The functional configuration shown in FIG. 11 is merely an example. The functional sections and the names of the functional units may be any as long as the operations according to the embodiment of the present invention can be executed. The transmission unit 110 and the reception unit 120 may be referred to as a communication unit.

The transmission unit 110 includes a function of generating a signal to be transmitted to the terminal 20 side and transmitting the signal by radio. The reception unit 120 includes a function of receiving various signals transmitted from the terminal 20 and acquiring, for example, information of a higher layer from the received signal. The transmission unit 110 has a function of transmitting NR-PSS, NR-SSS, NR-PBCH, a DL/UL control signal, DL data, and the like to the terminal 20. The transmission unit 110 and the reception unit 120 communicate with the LMF 30.

The configuration unit 130 stores configuration information configured in advance and various kinds of configuration information to be transmitted to the terminal 20 in a storage unit, and reads the configuration information from the storage unit as necessary. The control unit 140 performs, for example, resource allocation, overall control of the base station 10, and the like. Note that the functional units related to signal transmission in the control unit 140 may be included in the transmission unit 110, and the functional units related to signal reception in the control unit 140 may be included in the reception unit 120. The transmission unit 110 and the reception unit 120 may be referred to as a transmitter and a receiver, respectively. The function of the configuration unit 130 may be included in the control unit 140.

### <Terminal 20>

FIG. 12 is a diagram illustrating an example of a functional configuration of the terminal 20. As illustrated in FIG. 12, the terminal 20 includes a transmission unit 210, a reception unit 220, a configuration unit 230, and a control unit 240. The functional configuration shown in FIG. 12 is merely an example. The functional sections and the names of the functional units may be any as long as the operations according to the embodiment of the present invention can be executed. The transmission unit 210 and the reception unit 220 may be referred to as a communication unit.

The transmission unit 210 generates a transmission signal from the transmission data and transmits the transmission signal by radio. The reception unit 220 receives various signals by radio and acquires a signal of a higher layer from the received signal of the physical layer. The reception unit 220 receives the DL-PRS.

The configuration unit 230 stores various configuration information received from the base station 10 by the reception unit 220 in a storage unit, and reads the configuration information from the storage unit as necessary. The configuration unit 230 also stores configuration information configured in advance. The control unit 240 performs control of the entire terminal 20. The control unit 240 can also perform positioning processing. Note that the functional units related to signal transmission in the control unit 240 may be included in the transmission unit 210, and the functional units related to signal reception in the control unit 240 may be included in the reception unit 220. The transmission unit 210 and the reception unit 220 may be referred to as a transmitter and a receiver, respectively. The function of the configuration unit 230 may be included in the control unit 240.

### <LMF 30>

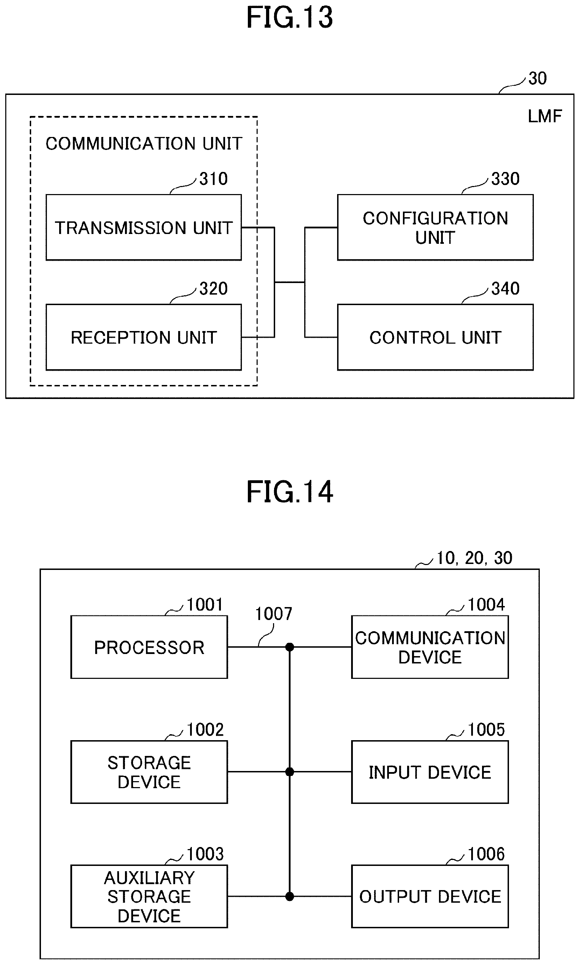

FIG. 13 is a diagram illustrating an example of a functional configuration of the LMF 30. As illustrated in FIG. 13, the LMF 30 includes a transmission unit 310, a reception unit 320, a configuration unit 330, and a control unit 340. The functional configuration shown in FIG. 13 is merely an example. The functional sections and the names of the functional units may be any as long as the operations according to the embodiment of the present invention can be executed. The transmission unit 110 and the reception unit 120 may be referred to as a communication unit.

The transmission unit 310 includes a function of generating a signal to be transmitted to the base station 10 side and transmitting the signal. The reception unit 320 receives various signals. The configuration unit 330 stores configuration information configured in advance and various kinds of generated configuration information in a storage unit, and reads the configuration information from the storage unit as necessary. The control unit 340 performs control of the entire LMF 30 and the like. Note that the functional units related to signal transmission in the control unit 340 may be included in the transmission unit 310, and the functional units related to signal reception in the control unit 340 may be included in the reception unit 320. The transmission unit 310 and the reception unit 320 may be referred to as a transmitter and a receiver, respectively. The function of the configuration unit 330 may be included in the control unit 340.

The terminal 20 and the base station 10 may be configured as, for example, a terminal and a base station described in the following items.

### (Item 1)

A terminal including:
a transmission unit configured to transmit, to a base station, information indicating a measurement gap for positioning using a reference signal in downlink by a MAC-CE or a UCI; and
a control unit configured to assume receiving of the reference signal by the measurement gap.

### (Item 2)

A terminal including:
a reception unit configured to receive, from a base station, a first plurality of pieces of configuration information of a measurement gap for positioning using a reference signal in downlink; and
a transmission unit configured to transmit, to the base station, first information designating one or a second plurality of pieces of configuration information from the first plurality of pieces of configuration information.

### (Item 3)

The terminal as described in item 2, further comprising:
a control unit configured to assume receiving the reference signal by a measurement gap based on the first information, or to assume receiving the reference signal based on second information received from the base station after receiving the first information.

### (Item 4)

A terminal including:
a reception unit configured to receive configuration information indicating that one measurement gap applying method of a first measurement gap applying method for applying a measurement gap based on a request from the terminal to a base station and a second measurement gap applying method for applying a measurement gap based on a request from a location management apparatus to the base station is enabled; and
a control unit configured to assume that a measurement gap applying method other than the enabled measurement gap applying method.

### (Item 5)

A terminal including:
a reception unit configured to receive configuration information of a first measurement gap related to a first measurement gap applying method for applying a measurement gap based on a request from the terminal to a base station, and configuration information of a second measurement gap related to a second measurement gap applying method for applying a measurement gap based on a request from a location management apparatus to the base station; and
a control unit configured to determine priorities of the first measurement gap and the second measurement gap based on provision or configuration.

### (Item 6)

A base station including:
a reception unit configured to receive, from a terminal, information indicating a measurement gap for positioning using a reference signal in downlink by a MAC-CE or a UCI; and
a transmission unit configured to transmit the reference signal in the measurement gap.

According to the configuration described in any of the above items, there is provided a technique that enables a terminal to properly receive a reference signal for positioning. According to the item 2, a measurement gap can be requested quickly. The control unit of item 1 that performs assumption may instruct the reception unit to configure a reference signal to receive based on the assumption.

### (Hardware Configuration)

The block diagrams (FIGS. 11-13) used in the description of the embodiment described above illustrate the block of functional units. Such functional blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmitting unit or the transmitter. As described above, the attainment method thereof is not particularly limited.

For example, the base station 10, the terminal 20, the LMF 30, and the like in one embodiment of this disclosure may function as a computer for performing the processing of a radio communication method of this disclosure. FIG. 14 is a diagram illustrating an example of a hardware configuration of the base station 10, the terminal 20 and the LMF 30 according to one embodiment of this disclosure. The base station 10, the terminal 20 and the LMF 30 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the base station 10 and the terminal 20 may be configured to include one or a plurality of apparatuses illustrated in the drawings, or may be configured not to include a part of the apparatuses.

Each function of the base station 10, the terminal 20 and the LMF 30 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. Also, for example, the control units 140, 240 and 340 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The auxiliary storage device 1003 may be referred to as the auxiliary storage device 1003. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wire network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the base station 10, the terminal 20 and the LMF 30 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

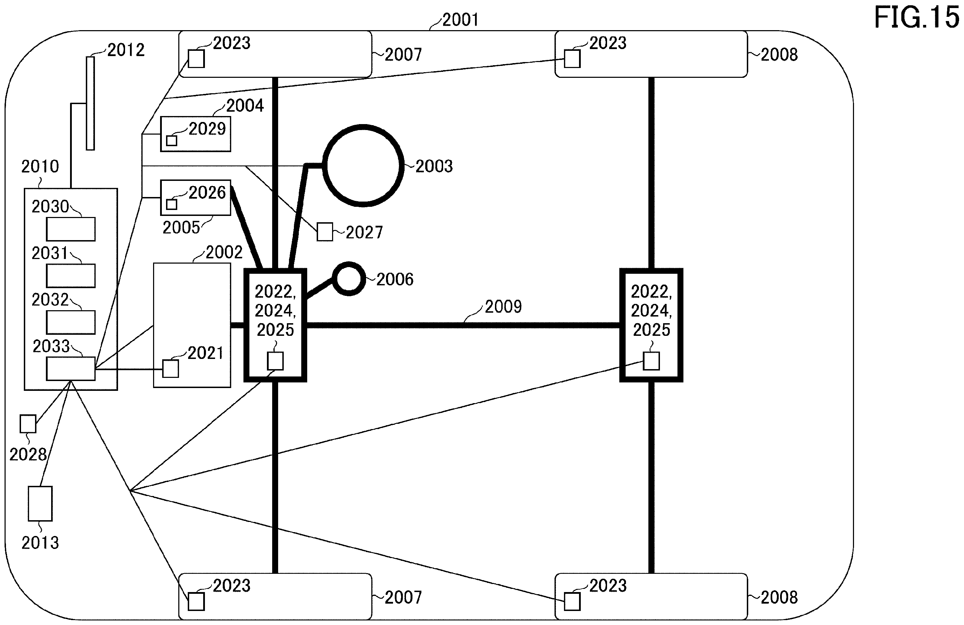

FIG. 15 shows a configuration example of a vehicle 2001 according to the present embodiment. As shown in FIG. 15, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. Each aspect/embodiment described in the present disclosure may be applied to a communication apparatus mounted on the vehicle 2001, and may be applied to, for example, the communication module 2013. The functions of the terminal 20 may be incorporated in the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10, the terminal 20 and the LMF 30 have been described by using a functional block diagram, but such an apparatus may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, a 4th generation mobile communication system (4G), a 5th generation mobile communication system (5G), future radio access (FRA), new radio (NR), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding information. For example, a radio resource may be indicated by an index.

The names used in the parameters described above are not a limited name in any respect. Further, expressions or the like using such parameters may be different from those explicitly disclosed in this disclosure. Various channels (for example, PUSCH, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication apparatus, and the like. Note that, at least one of the base station and the mobile station may be a device that is mounted on a mobile object, the mobile object itself, or the like. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the terminal. For example, each aspect/embodiment of this disclosure may be applied to a configuration in which communication between the base station and the user terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the user terminal in this disclosure may be replaced with the base station. In this case, the function of the user terminal described above may be provided in the base station.

The terms "determining" used in this disclosure may involve diverse operations. "Determining" and "determining", for example, may include deeming judging, calculating, computing, processing, deriving, investigating, looking up (search, inquiry) (for example, looking up in a table, a database, or another data structure), and ascertaining, as "determining" and "determining". In addition, "determining" and "determining" may include deeming receiving (for example, receiving information), transmitting (for example, transmitting information), input, output, and accessing (for example, accessing data in a memory), as "determining" and "determining". In addition, "determining" and "determining" may include deeming resolving, selecting, choosing, establishing, comparing, and the like as "determining" and "determining". That is, "determining" and "determining" may include deeming an operation as "determining" and "determining". In addition, "determining (determining)" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time units greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time units at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI unit, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined based on the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a sub-carrier group (SCG), a resource element group (REG), a PRB pair, an RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In UE, one or a plurality of BWPs may be configured within one carrier.

At least one of the configured BWPs may be active, and it need not be assumed that the terminal 20 transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

In the present disclosure, the SS block or the CSI-RS is an example of a synchronization signal or a reference signal.

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

### Description of Symbols

- 10: base station
- 110: transmission unit
- 120: reception unit
- 130: configuration unit
- 140: control unit
- 20: terminal
- 210: transmission unit
- 220: reception unit
- 230: configuration unit
- 240: control unit
- 30: LMF
- 310: transmission unit
- 320: reception unit
- 330: configuration unit
- 340: control unit
- 1001: processor
- 1002: storage unit
- 1003: auxiliary storage unit
- 1004: communication device
- 1005: input device
- 1006: output device

## Claims

1. A terminal comprising:
a transmission unit configured to transmit, to a base station, information indicating a measurement gap for positioning using a reference signal in downlink by a MAC-CE or a UCI; and
a control unit configured to assume receiving of the reference signal by the measurement gap.

2. A terminal comprising:
a reception unit configured to receive, from a base station, a first plurality of pieces of configuration information of a measurement gap for positioning using a reference signal in downlink; and
a transmission unit configured to transmit, to the base station, first information designating one or a second plurality of pieces of configuration information among the first plurality of pieces of configuration information.

3. The terminal as claimed in claim 2, further comprising:
a control unit configured to assume receiving of the reference signal by a measurement gap based on the first information, or to assume receiving of the reference signal based on second information received from the base station after receiving the first information.

4. A terminal comprising:
a reception unit configured to receive configuration information indicating that one measurement gap applying method of a first measurement gap applying method for applying a measurement gap based on a request from the terminal to a base station and a second measurement gap applying method for applying a measurement gap based on a request from a location management apparatus to the base station is enabled; and
a control unit configured to assume that a measurement gap applying method other than the enabled measurement gap applying method is not enabled.

5. A terminal comprising:
a reception unit configured to receive configuration information of a first measurement gap related to a first measurement gap applying method for applying a measurement gap based on a request from the terminal to a base station, and configuration information of a second measurement gap related to a second measurement gap applying method for applying a measurement gap based on a request from a location management apparatus to the base station; and
a control unit configured to determine priorities of the first measurement gap and the second measurement gap based on provision or configuration.

6. A base station comprising:
a reception unit configured to receive, from a terminal, information indicating a measurement gap for positioning using a reference signal in downlink by a MAC-CE or a UCI; and
a transmission unit configured to transmit the reference signal in the measurement gap.
